Europäisches Patentamt

European Patent Office

Office européen des brevets

(19)

(11) Publication number: **0 000 419**

**B1**

(12) **EUROPEAN PATENT SPECIFICATION**

(45) Date of publication of patent specification: **25.11.81**

(21) Application number: **78200094.7**

(22) Date of filing: **13.07.78**

(51) Int. Cl.³: **C 08 F 212/00,**
**C 08 F 220/42,**
**C 08 F 279/04 //C08F2/18**
**(C08F212/00, 220/42),**
**(C08F220/42, 212/00),**
**(C08F279/04, 212/00,**
**220/42)**

(54) Process for preparing copolymers, and products fully or partly made of these copolymers.

(30) Priority: **19.07.77 NL 7708002**

(43) Date of publication of application:
**24.01.79 Bulletin 79/2**

(45) Publication of the grant of the European patent:
**25.11.81 Bulletin 81/47**

(84) Designated Contracting States:
**BE DE FR GB NL**

(56) References cited:
**FR - A - 2 000 853**
**FR - A - 2 102 921**
**FR - A - 2 249 899**
**US - A - 3 414 547**

(73) Proprietor: **STAMICARBON B.V.**
**Postbus 10**
**NL-6160 MC Geleen (NL)**

(72) Inventor: **Van der Loos, Jozef Lambertus Maria**
**Rijksweg Z 146**
**NL-6134 AE Sittard (NL)**
Inventor: **Duijzings, Wilhelmus Gerardus**
**Muntstraat 8**
**NL-6121 JL Born (NL)**

(74) Representative: **Van de Panne, Vitus Nicolaas**
**Octrooibureau DSM Postbus 9**
**NL-6160 MA Geleen (NL)**

Courier Press, Leamington Spa, England.

# 0 000 419

Process for preparing copolymers, and products fully or partly made of these copolymers

The invention relates to a process for preparing copolymers by polymerization in aqueous dispersion of 25—85 parts by weight of styrene and/or $\alpha$-methyl styrene with 75—15 parts by weight of acrylonitrile and/or methacrylonitrile and, possibly, minor quantitites of one or more other monomers, optionally in the presence of a rubber, with the aid of one or more compounds yielding free radicals, in which process an additional amount of a compound yielding free radicals is added after the conversion has reached a value of more than 75 w.-%.

This process is well-known and is applied on a large scale in industry. However, it yields products that may contain a considerable quantity of non-converted monomers.

This quantity may even lie in the order of magnitude of a few per cent, depending on the polymerization conditions. The monomer residues are highly undesirable. They have an adverse influence on the properties of the end product, such as gloss and heat resistance, and may moreover be released from the product during its subsequent processing or in its application, which is highly undesirable in view of the negative environmental impact and the toxicity.

Therefore, intensive research has been carried out for a long time already to find methods to reduce the monomer content of such polymers. It has been proposed to treat the polymer dispersion with steam for the purpose of stripping part of the non-converted monomers from the polymer. This treatment may be effective, particularly with protracted treating, but it is expensive, as regards investment as well as energy consumption.

It has also been proposed to carry out the removal of monomers in a so-called degasifying extruder. To this end, the polymer is melted in an extruder with simultaneous build-up of a high pressure.

Next, the product comes in a zone where the pressure has been strongly reduced and where the volatile components are exhausted. This process requires very high investments, especially because the capacity of this degasifying extruder is, of necessity, low if a high removal efficiency is to be achieved. In U.S. Patent Specification 3.991.136 it has been proposed that, after the polymerization has proceeded to a degree of conversion of 90%, a new monomer be added which is very reactive with the non-converted monomer. This new monomer should be added in a quantity of 5 to 10 w.-%, so that it will have a substantial influence on the polymer properties. Further, an additional monomer involves relatively high cost because of the extra investments and operations its requires.

The purpose of the invention is providing a process which yields polymers of a very low monomer content, without monomers of another kind having to be applied. Another purpose of the invention is providing a solution to the problem of removing non-converted monomer without negatively influencing the properties of the polymer. A further purpose of the invention is reducing the environmental impact and the possible risks from monomer emission during the production and processing of the polymer. It is also a purpose of the invention to raise the capacity of the polymerization reactors. Further, it is a purpose of the invention to utilize the monomers applied in a more efficient way.

It has now been found that these purposes can be fulfilled by adding to the polymer dispersion, at a carefully chosen point of time, a certain amount of a special compound yielding free radicals.

The process for preparing copolymers according to the invention is characterized in that a compound which yields water-soluble free radicals which can be the same as, or different from the compound used at the beginning of the polymerization is additionally supplied in a quantity of 0.05—2.5 parts by weight per 100 parts by weight of total monomer after the conversion rate has become smaller than 15 w.% per hour, and the addition of monomers has been terminated, while at least 0.1 w.-% of non-converted (meth)acrylonitrile remains in the reaction medium.

The weight percentage of non-converted (meth)acrylonitrile is calculated with reference to the total reaction medium, i.e. water together with substances dissolved and dispersed in it.

It is to be considered as highly surprising that a simple measure as described above, provided it is carried out at the correct point of time and with the proper compounds, is capable of drastically reducing the monomer content, without affecting the properties of the polymer, of increasing at the same time, not insubstantially, the capacity of the polymerization reactor employed and, also, of causing the monomer feedstocks supplied to be used more efficiently.

Even, the properties of the polymer are improved by employing this measure. For it has been found that the flow and the heat distortion temperature are improved when using the process according to the invention. Moreover, the process according to the invention leads to substantial reduction of the drying-time of certain products.

One should expect that the addition of an extra amount of a compound yielding free radicals yields a copolymer whose composition deviates from the polymer already prepared, resulting in inhomogeneities. In particular, it would be expected that at the end of the polymerization, when the polymer to monomer ratio is very high, transfer reactions with the polymer would occur, which may result in

2

**0 000 419**

linkage reactions which affect the processability (see Emulsion Polymerization Theory & Practice, D.C. Blackley, 1975, pp 71 and 72). It appears that these disadvantages do not occur if one proceeds according to the present invention.

It was found that the effect of the present invention cannot be reached through an increase in the quantity of initiator which is added at the beginning or in the course of the polymerization, but before the moment specified according to the invention.

It is of great importance that the extra addition of initiator is not effected too early, but not too late either. The quantity of non-converted (meth)acrylonitrile in the reaction medium should be at least 0.1 w.-%. Preferably, this weight percentage should be at least 0.2 w.-% or, specifically, at least 0.5 w.-%. At lower values, no or hardly any reduction of the proportion of residual monomers occurs, especially as regards the proportion of styrene and $\alpha$-methyl styrene. This is very surprising as styrene in particular is known to polymerize very easily.

In general, polymerizations in dispersion show a maximum in the conversion rate, which maximum expresses itself in the form of a temperature peak that cannot be fully coped with by cooling. Supply of compounds yielding free radicals at about the point of time this temperature peak occurs proves not to produce the required, favourable result. On the contrary, the result is even negative in relation to a number of properties like the notch impact strength at low temperature and the stiffness, so that such supply, therefore, should be considered a pure waste of auxiliary material(s). The process according to the invention is the more surprising as the field of polymerization of monomers in aqueous dispersion as for a long time already been the subject of much research. Since these polymers are moreover produced and applied in very large quantities, the results of the present invention are of very great importance.

The polymerization according to the invention takes place in an aqueous dispersion. The term aqueous dispersion is understood to include both emulsions and suspensions. The present invention is aimed in particular at the emulsion polymerization because in this polymerization the best results are obtained.

The extra monomers of which one or more may be included in the polymerization process in minor proportions are, among other, ionogenic vinyl compound and/or alkyl compounds, flame killers to be built in, or multi-functional compounds, such as di-vinyl benzene or an alkyl ester of (meth)acrylic acid. Special preference is given to polymers which contain more than 50 w.-% of styrene, in particular $\alpha$-methyl styrene.

Especially in the case of $\alpha$-methyl styrene polymers the greatest problems occur in relation to the monomer content in the finished product.

$\alpha$-Methyl styrene monomer is very difficult to remove then. Particularly with these polymers the present invention appears to yield excellent results.

The emulsion polymerization can be carried out with a good result in the presence of a previously prepared rubber latex, for instance, a polybutadiene latex. In addition to the free polymer formed also a graft polymer may form, which is of importance to the impact strength.

In the polymerization in aqueous dispersion the usual auxiliary materials necessary for that purpose should be applied, such as emulsifiers, lye, suspension agents, salts, soaps, initiators like peroxides, and molar-weight regulators. In the emulsion polymerization one chooses preferably alkali- or ammonium-persalts and/or redox systems for initiators. In particular, mention is to be made of potassium persulphate, ammonium persulphate and sodium persulphate. Examples of redox systems are persalts, (e.g. perchlorates or persulphates), tert. butyl hydroperoxide, cumene hydroperoxide, diisopropyl benzene hydroperoxide and methyl cyclohexyl hydroperoxide, combined with reduction agents based on acids containing sulphur in a low-valency state, such as sodium formaldehyde sulphoxylate, bisulphite, pyrosulphite, or with organic bases (like triethanolamine), with dextrose, sodium pyrophosphate and mercaptans or combinations thereof, optionally in combination with metal salts such as ferrous sulphate. These initiators or initiator systems may be supplied all at once, stepwise or even gradually.

Generally, the polymerization in emulsion starts only slowly. The conversion rate increases slowly, to reach a few hundred per cent per hour at the highest value. This means a considerable heat production within a relatively short time, which results in a temperature increase because the cooling cannot cope with this rapid heat development. Subsequently, the conversion rate will decrease slowly, whereupon according to the state of the art, the polymerization is discontinued at a point of time at which the polymerization rate has become too small for the polymerization still to be continued to advantage.

However, according to the present invention, after the conversion degree has reached a value of more than 75% by weight and the conversion rate has become lower than 15% by weight per hour and after the monomer addition has been terminated, while at least 0.1 wt.-% of non-converted (meth)acrylonitrile) remains in the total reaction medium, a compound yielding water-soluble free radicals is added additionally. In this way it is achieved that the total polymerization time is not extended. This yields the great advantage of an increased production capacity of the polymerization reactor without any appreciable investments.

At the same time, a polymer is obtained having such a low monomer content that the capacity

3

problems occurring in the subsequent processing to, for instance, granulate, are eliminated straight away. These capacity problems are the results of the measures to be taken to decrease the high monomer content, namely intensive and long drying and/or the application of degasifying extruders. The compounds yielding water-soluble free radicals are, themselves, often completely water-soluble. Examples are persulphates, such as potassium persulphate and ammonium persulphate. But also compounds which are not completely water-soluble but yield water-soluble free radicals can be applied with very good results. Examples are the tert.-butyl-peroxy compounds, like di-tert. butyl peroxide, di-tert. butylperoxydicarbonate, tert. butyl peracetate, tert. butyl perpivalate, tert. butyl perbenzoate, and tert- butyl hydroperoxide. These compounds are particularly preferable because very stable latices are obtained. This is of importance during transportation and storage of the latices. Further, also compounds which are not completely water-soluble and which form part of a redox system that yields water-soluble free radicals can be applied.

Examples of compounds of this kind are hydroperoxides, such as cumene hydroperoxide, diisopropyl benzene hydroperoxide, triisopropyl benzene hydroperoxide, tert. butyl isopropyl benzene hydroperoxide and dodecyl isopropyl benzene hydroperoxide.

The amount of additionally added compound yielding free radicals preferably amounts to 25 to 500% by weight, particularly to 50 to 300%, by weight of the quantity of initiator added previously. Although in itself not necessary, it may offer advantages if the additionally supplied initiator consists of the same compound which was supplied at the beginning of the polymerization.

The additionally added compound yielding free radicals is preferably added after the conversion degree has become larger than 80%, by weight in particular larger than 90% by weight. Conversion degree is understood to mean the quotient of the quantity of monomers converted into polymer and the total quantity of added monomers, multiplied by 100%. The addition does not take place until the conversion rate has become very low i.e. less than 15% by weight per hour, by preference lower than 8% by weight per hour, more particularly lower than 4% by weight per hour.

At the time the additional amount of compound yielding free radicals is added, the temperature should be sufficiently high. Preference is given to temperatures above 30°C, preferably above 45°C. But the temperature should not be chosen too high. Suitable temperatures lie below 120°C, in particular below 100°C. The half-life period of the compound yielding free radicals at these temperatures is, by preference, not too high, i.e. smaller than 5 hours, in particular smaller than 2 hours. It is advantageous to apply short half-life periods, which can be done by the choice of the temperature and/or the compound yielding free radicals. A half-life period smaller than 1 hour is the most preferable.

In the following examples all percentages are given by weight, unless otherwise indicated.

## Example I

52g of acrylonitrile, 20g of styrene and 98g of $\alpha$-methyl styrene were added, with exclusion of air, to 420 g of oxygen-free, deionized water, in which were dissolved 0.28 g of KOH and 4.0 g of rosin soap and an emulsion was formed having a temperature of 75°C. After the reaction mixture had been brought to 50°C, with an oil bath, a redox initiator system was subsequently added to it which consisted of: 0.84 g of cumene hydroperoxide, 0.02 g of ferrous sulphate dissolved in 10 g of water, and the mixture of 1.0 g of sodium pyrophosphate in 1.2 g of dextrose dissolved in 30 g of water.

Owing to the heat of polymerization, the temperature in the polymerization medium rose in 31 minutes to 86.5°C and dropped thereupon gradually to 75°C. To determine the content of non-converted monomer in the total reaction medium, a sample of 1 ml was taken from the reaction medium after 90 minutes, counting from the point of time the initiator system was added, in which sample, after dilution with dimethyl formamide, the quantity of non-converted monomer was determined gas-chromatographically, from which the monomer conversion was calculated. This amounted to 94.9% at this point of time. The polymerization rate can be determined by taking 2 samples in succession with a known, short time interval. This rate amounted to 1.2% per hour at this point of time. Immediately after the sampling, 0.34 ml of a 75% solution of tert. butyl perpivalate in mineral oil was added to the reaction mixture in accordance with the process of the invention. The half-life period of this peroxide amounts to 0.8 hr at 75°C. Next, the residual monomer content in the reaction medium was determined after 120 and 150 minutes from the beginning of the polymerization, in the same way as described above. From the various concentrations after 90 and 150 minutes the monomer conversion during the last hour of the polymerization can be calculated, viz.

$$\text{mon. conv.} = \frac{C\ 90\ \text{min.} - C\ 150\ \text{min.}}{C\ 90\ \text{min.}} \times 100\%$$

The results are mentioned in table 1, under No. I.

*Comparative example 1 A*

The realization of this polymerization is completely identical with that described in example I, on the understanding that addition of tert. butyl perpivalate was omitted in this experiment.

Comparing the residual monomer contents of this comparative example with those of example I clearly shows that the decrease of the acrylonitrile- and the styrene- and the $\alpha$-methyl styrene monomer concentration is considerably greater in the process according to the invention than in the comparative example (see table 1, experiment I A).

## Example II

Example I was repeated, 60 g of a polybutadiene rubber latex containing 50 w.-% of solid being added to increase the impact strength, whilst the total quantity of water of example I was kept constant.

The results can be found in table 1.

*Comparative example II A*

In order to demonstrate additionally the effect of the extra supply of the compound yielding free radicals according to the invention also in the presence of rubber, example II was repeated, but without addition of tert. butyl perpivalate. This experiment was carried out in duplicate; the results thereof are given, between parentheses, in table 1.

*Comparative example II B*

In order to demonstrate that the addition of the extra supply of compound yielding free radicals must take place after the conversion has become larger than 75% the experiment of example II was repeated, the tert. butyl perpivalate being added at the peak temperature, at which point of time the conversion amounted to 72% according to gas-chromatographic analysis. The conversion rate amounted to 83%/hr at this moment. The results show that in the last part of the polymerization no extra decrease of the free monomer content is obtained (see table 1).

TABLE 1

| | | Examples according to the invention | | | | | | | | | |
|---|---|---|---|---|---|---|---|---|---|---|---|
| | | I | | II | | Ia | | IIa | | IIb | |
| **At point of time extra agent yielding free radicals is added:** | | | | | | | | | | | |
| — monomer conversion % | | 94.9 | | 94.9 | | 93.6 | | 93.3 | | 72 | |
| — polymerization rate %/hr | | 1.2 | | 1.5 | | | | | | 83 | |
| time (min.) | monomer * | w.–% free mon. | mon. conv. %/hr. | w.–% free mon. | mon. conv. %/hr. | w.–% free mon. | mon. conv. %/hr. | w.–% free mon. | mon. conv. %/hr. | w.–% free mon. | mon. conv. %/hr. |
| 90 | ACN | 0.96 | | 0.78 | | 0.93 | | 0.85 (0.71) | | 0.81 | |
| | S | 0.10 | | 0.16 | | 0.10 | | 0.16 (0.14) | | 0.12 | |
| | $\alpha$mS | 0.31 | | 0.71 | | 0.34 | | 0.70 (0.61) | | 0.47 | |
| 120 | ACN | 0.72 | | 0.53 | | 0.85 | | 0.76 (0.66) | | 0.76 | |
| | S | 0.04 | | 0.07 | | 0.09 | | 0.12 (0.12) | | 0.11 | |
| | $\alpha$mS | 0.09 | | 0.30 | | 0.26 | | 0.55 (0.52) | | 0.42 | |
| 150 | ACN | 0.65 | 32 | 0.49 | 37 | 0.80 | 14 | 0.72 (0.61) | 15 (14) | 0.69 | 15 |
| | S | 0.03 | 70 | 0.07 | 56 | 0.08 | 20 | 0.12 (0.11) | 25 (21) | 0.10 | 17 |
| | $\alpha$mS | 0.07 | 77 | 0.27 | 62 | 0.21 | 38 | 0.50 (0.45) | 29 (26) | 0.35 | 26 |
| HDT (annealed) ** °C | | | | 114 | | | | 106 | | 108 | |

*ACN = acrylonitrile
S    = styrene
$\alpha$mS = $\alpha$ methyl styrene
HDT** (annealed) = Heat Distortion Temperature measured according to ASTM D 648 at a bending stress of 18.5 kg/cm² after conditioning at 105 °C for 2 hours and cooling in the air.

### Example III

In this example the polymerization of acrylonitrile, styrene and $\alpha$-methyl styrene was carried out in 2 steps, in which, according to the invention, extra potassium persulphate was added at the end of the second step. In the first step, successively, the following were added to a polymerization vessel, while stirring: 230 g of water, 60 g of a 50% polybutadienelatex, 2 g of rosin soap, 0.14 g of KOH, 10 g of styrene, 26 g of acrylonitrile, 49 g of $\alpha$-methyl styrene, and 0.2 g of tert. dodecyl mercaptan. After this reaction mixture had been heated to 40°C with the aid of a bath of 65°C, the initiator system was added, consisting of: 0.84 g of cumene hydroperoxide and 1.2 g of dextrose + 1.0 g of sodium pyrophosphate, dissolved together in 30 g of water, and 0.02 g of ferrous sulphate dissolved in 10 g of water. After 2 hours about 95% of the monomers had been converted into polymer. Subsequently, for the second step of the polymerization, the following was added to the polymer latex formed: 150 g of water, 2 g of rosin soap, 0.14 g of KOH, 10 g of styrene, 26 g of acrylontrile, 49 g of $\alpha$-methyl styrene, and 0.6 g of tert. dodecyl mercaptan. After this mixture had again reached a temperature of 50°C, 0.4 g of potassium persulphate dissolved in 10 g of water was added to it as initiator. 90 minutes after the second step of the polymerization had been started, the conversion, determined gas-chromatographically, amounted to 90.5%. At this point of time, according to the invention, 0.4 g of potassium persulphate dissolved in 10 g of water was added and the decrease of the non-converted monomer was continued. For results, see table 2.

### Comparative example IIIa

Example III was repeated, without application however, of the extra potassium persulphate supply at the end of the second step. Comparison of the results of experiments III and IIIa shows that in the process according to the invention a substantially improved monomer removal has taken place.

### TABLE 2

| experiment | | III | | | IIIa | | |
|---|---|---|---|---|---|---|---|
| total monomer conv. after 90 min. in 2nd step in % | | 90.5 | | | 90.4 | | |
| time (min) | monomer | w.−% | | monomer conv. %/hr | w.−% | | monomer conv. %/hr |
| 90 | ACN | 0.94 | | | 0.94 | | |
| | S | 0.22 | | | 0.19 | | |
| | $\alpha$mS | 0.69 | | | 0.91 | | |
| 120 | ACN | 0.64 | | | 0.80 | | |
| | S | 0.13 | | | 0.16 | | |
| | $\alpha$mS | 0.69 | | | 0.91 | | |
| 150 | ACN | 0.53 | | 44 | 0.75 | | 20 |
| | S | 0.10 | | 55 | 0.15 | | 21 |
| | $\alpha$mS | 0.53 | | 58 | 0.82 | | 29 |
| HDT annealed °C | | 111 | | | 108 | | |

### Examples IV to X incl.

In this series of examples, example I was repeated, a different initiator being added, however, in each example after 90 min. In examples IV and V, forming part of the invention, considerably more monomer was converted into polymer during the last hour of the polymerization than in examples VI to X incl., in which a radical-yielding compound was applied which generates water-insoluble radicals. For the results, reference is made to table 3.

TABLE 3

| | | Examples | | | | Comparative examples | | | | | | | | | |
|---|---|---|---|---|---|---|---|---|---|---|---|---|---|---|---|
| | | IV | | V | | VI | | VII | | VIII | | IX | | X | |
| Initiator applied | | 0.4 g KPS | | 1 ml CHP + red. system acc. to ex. 1 | | 0.6 g Perk Y 16 | | 1 ml IPP | | 1.24 g SP | | 0.6 g DLPO | | 0.37 AVN | |
| half-life period initiator in hr | | c. 0.5 | | <1 | | 0.1 | | 0.1 | | 0.35 | | 1.7 | | 0.8 | |
| time | monom. | w.–% | mon. conv. %/hr | w.–% | mon. conv. %/hr | w.–% | mon. conv. %/hr | w.–% | mon. conv. %/hr | w.–% | mon. conv. %/hr | w.–% | mon. conv. %/hr | w.–% | mon. conv. %-hr |
| 90 | ACN | 0.78 | | 0.90 | | 0.80 | | 0.85 | | 0.81 | | 0.80 | | 0.74 | |
| | S | 0.17 | | 0.15 | | 0.15 | 1 | 0.16 | | 0.15 | | 0.15 | | 0.15 | |
| | αmS | 0.69 | | 0.58 | | 0.68 | | 0.70 | | 0.68 | | 0.63 | | 0.68 | |
| 120 | ACN | 0.56 | | 0.55 | | 0.71 | | 0.76 | | 0.72 | | 0.72 | | 0.68 | |
| | S | 0.08 | | 0.07 | | 0.12 | | 0.12 | | 0.12 | | 0.12 | | 0.11 | |
| | αmS | 0.34 | | 0.16 | | 0.55 | | 0.55 | | 0.54 | | 0.52 | | 0.50 | |
| 150 | ACN | 0.50 | 36 | 0.45 | 50 | 0.66 | 18 | 0.72 | 15 | 0.70 | 14 | 0.68 | 18 | 0.61 | 18 |
| | S | 0.07 | 59 | 0.03 | 80 | 0.11 | 27 | 0.12 | 25 | 0.11 | 27 | 0.11 | 27 | 0.10 | 33 |
| | αmS | 0.25 | 64 | 0.12 | 79 | 0.46 | 32 | 0.50 | 29 | 0.47 | 31 | 0.46 | 27 | 0.41 | 40 |
| HDT annealed °C | | 112 | | 112 | | 110 | | 106 | | 110 | | 105 | | 110 | |

KPS = potassium persulphate
CHP = cumene hydroperoxide
Perk. Y 16 = bis(4-tert.butyl cyclohexyl) peroxydicarbonate
IPP = diisopropyl peroxydicarbonate
SP = stearyl percarbonate
DLPO = dilauroyl peroxide
AVN = azobisdimethyl valeronitrile

0 000 419

### Examples XI and XII

These examples were a repetition of example I. The polymerization process was applied to a mixture containing acrylonitrile and $\alpha$-methyl styrene, but no styrene, and instead of the redox initiator system, potassium persulphate was used. After a polymerization time of 120 minutes, 0.8 g KPS dissolved in 10 g water was added.

The composition of the monomer mixture was such that the concentration of the water-soluble component (acrylonitrile) under these polymerization conditions varied strongly at the time of adding the extra quantity of KPS.

From the calculated monomer conversion during the last hour (mon. conv.) it clearly appears that $\alpha$-methyl styrene removal decreases strongly as the ACN concentration in the latex declines.

For results see table 4.

### Comparative Example XIII

In this comparative example, which was analogous to examples XI and XII, the monomer mixture was such that the acrylonitrile concentration in the latex at the time of addition of the extra quantity of KPS was lower than 0.1%.

The results show that at this low ACN concentration the level of $\alpha$-methyl styrene removal was considerably lower than in examples XI and XII in spite of the extra addition of initiator. The level of $\alpha$-methyl styrene removal is about the same as reached without extra addition of water-soluble initiator (also see comparative example I a).

For results see table 4.

### TABLE 4

| | | Examples acc. invention | | | | compar. example | |
| --- | --- | --- | --- | --- | --- | --- | --- |
| | | XI | | XII | | XIII | |
| Monomer mix % | ACN | 36 | | 33 | | 30 | |
| | $\alpha$m.s. | 74 | | 67 | | 70 | |
| Polymerization time (min.) | | w.–% free mon. | mon. conv. %/hr | w.–% free mon. | mon. conv. %/hr | w.–% free mon. | mon. conv. %/hr |
| 120 | ACN | 0.71 | | 0.17 | | 0.07 | |
| | $\alpha$m.s. | 1.23 | | 1.20 | | 1.18 | |
| 180 | ACN | 0.37 | | 0.07 | | 0.03 | |
| | $\alpha$-m.s. | 0.27 | 78 | 0.62 | | 0.82 | 30 |

### Example XIV

In this example, a ternary mixture of acrylonitrile, $\alpha$-methyl styrene and methacrylate allyl ester in weight proportions of 31.9, 67.7 and 0.4, respectively, was polymerized in emulsion, as described in example I, with potassium persulphate as initiator. One hour before termination of the polymerization, 0.8 g potassium persulphate dissolved in 10 g water was added. Upon termination of the polymerization, it appeared that the monomer concentration in the latex was 0.22% for ACN and 0.13% for $\alpha$-methyl styrene, which means that the level of $\alpha$-methyl styrene removal was very high.

### Example XV

Example XIV was repeated with a ternary mixture containing 20.4 parts by weight of acrylonitrile, 67.9 parts by weight of $\alpha$-methyl styrene and 11.7 parts by weight of methyl methacrylate (MMA). The MMA was not initially present, but was gradually supplied to the reactor in about 40 minutes subsequent to addition of the initiator; 30% of the required quantity of ACN was supplied to the reactor only after 190 minutes.

Next, after 240 minutes, 0.8 g potassium persulphate dissolved in 10 g water was added.

After 300 minutes, it appeared that the monomer concentration in the latex was: ACN + MMA: 0.13% and $\alpha$-m.s.: 0.63%.

9

# 0 000 419

## Claims

1. Process for preparing a copolymer by polymerization in aqueous dispersion of 25—85 parts by weight of styrene and/or $\alpha$-methylstyrene with 75—15 parts by weight of acrylonitrile and/or methacrylonitrile and, possibly, a minor proportion of one or more other monomers, optionally in the presence of a rubber, with the aid of one or more compounds yielding free radicals, in which process an additional amount of a compound yielding free radicals is added after the degree of conversion has reached a value of more than 75 w.-% characterized in that a compound which yields water-soluble free radicals which can be the same as or different from the compounds used at the beginning of the polymerization is additionally supplied in a quantity of 0.05—2.5 parts by weight per 100 parts by weight of total monomer and which compound is added after the conversion rate has become smaller than 15 w.-% per hour, and after the addition of monomers has been terminated, and while at least 0.1 w.-% of non-converted (meth)acrylonitrile based on the total reaction medium remains in the reaction medium.

2. Process according to claim 1, characterized in that the compound yielding water-soluble free radicals is added when at least 0.2 w.-% of non-converted (meth)acrylonitrile remains in the reaction medium.

3. Process according to claim 1 or 2, characterized in that the compound yielding water-soluble free radicals is chosen from tertiary-butyl-peroxy compounds, hydroperoxides and persulphates.

4. Products fully or partly consisting of the copolymer prepared according to any one of the claims 1—3.

## Patentansprüche

1. Verfahren zur Herstellung von einem Mischpolymerisat durch Polymerisation von 25 bis 85 Gew.-Teilen Styrol und/oder $\alpha$-Methylstyrol mit 75 bis 15 Gew.-Teilen Acrylnitril und/oder Methacrylnitril und, gegebenenfalls, einem geringen Teil eines oder mehrerer anderer Monomeren in einer wässrigen Dispersion, vorzugsweise in Anwesenheit eines Kautschuks, mit Hilfe einer oder mehrerer freie Radikale liefernder Verbindungen, in welchem Verfahren eine zusätzliche Menge einer freie Radikale liefernden Verbindung zugesetzt wird, nachdem der Umsetzungsgrad mehr als 75 Gew.-% beträgt, dadurch gekennzeichnet, dass eine wasserlösliche freie Radikale liefernde Verbindung beigegeben wird, die ähnlich der oder abweichend von der am Anfang der Polymerisation benutzten Verbindung sein kann, und zwar in einer Menge von 0,05 bis 2,5 Gew.-Teile je 100 Gew.-Teile der gesamten Monomermenge, nachdem die Umsetzungsgeschwindigkeit geringer geworden ist als 15 Gew.-% je Stunde, die Zufuhr der Monomeren beendet ist und wenn mindestens 0,1 Gew.% nichtumgesetztes (Meth)acrylnitril bezogen auf des gesamte Reaktionsmittel, im Reaktionsmittel verbleibt.

2. Verfahren nach Anspruch 1, dadurch gekennzeichnet, dass die freie Radikale liefernde Verbindung zugesetzt wird, wenn mindestens 0,2 Gew.-% nichtumgesetztes (Meth)acrylnitril im Reaktionsmittel verbleibt.

3. Verfahren nach Anspruch 1 oder 2, dadurch gekennzeichnet, dass die wasserlösliche freie Radikale liefernde Verbindung aus tert.-Butylperoxyverbindungen, Hydroperoxyden und Persulfaten gewählt wird.

4. Vollständig oder teilweise aus dem gemäss einem der Ansprüche 1 bis 3 hergestellten Mischpolymerisat bestehende Erzeugnisse.

## Revendications

1. Procédé de préparation de copolymères par polymérisation, dans une dispersion aqueuse de 25—85 parties en poids de styrène et/ou d'$\alpha$-méthylstyrène avec 75—15 parties en poids d'acrylonitrile et/ou de méthacrylonitrile et, éventuellement, une faible portion d'un ou de plusieurs autres monomères, éventuellement en présence d'un caoutchouc, à l'aide d'un ou de plusieurs composés produisant des radicaux libres, procédé dans lequel on ajoute une quantité supplémentaire d'un composé produisant des radicaux libres après que le degré de conversion a atteint une valeur de plus de 75% en poids, caractérisé en ce qu'un composé produisant des radicaux libres solubles dans l'eau, qui peut être le même ou différent de celui utilisé au début de la polymérisation, est ajouté additionnellement par une quantité de 0,05—2,5 parties en poids par 100 parties en poids du monomère total, après que la vitesse de conversion est devenue inférieure à 15% en poids par heure, et après que l'addition de monomères est terminée et que du moins 0,1% en poids de (méth)acrylonitrile non converti, calculé par rapport au médium réactionnel total, reste dans le médium réactionnel.

2. Procédé selon la revendication 1, caractérisé en ce que le composé produisant des radicaux libres soluble dans l'eau est ajouté quand du moins, 0,2% en poids de (méth)acrylonitrile non converti reste dans le médium réactionnel.

3. Procédé selon l'une des revendications 1 à 2, caractérisé en ce que le composé produisant des radicaux libres solubles dans l'eau est choisi parmi le groupe consistant de composés tert.-butyl-peroxy, hydroperoxydes et persulfates.

4. Produits consistant entièrement ou partiellement du copolymère préparé selon l'une ou l'autre des revendications 1 à 3.